(19) Europäisches Patentamt
European Patent Office
Office européen des brevets

(11) **EP 4 580 234 A1**

(12) **EUROPEAN PATENT APPLICATION**

(43) Date of publication:
**02.07.2025 Bulletin 2025/27**

(21) Application number: **24222295.8**

(22) Date of filing: **20.12.2024**

(51) International Patent Classification (IPC):
**H04W 16/14** (2009.01) **H04B 7/155** (2006.01)
**H04B 7/26** (2006.01) **H04L 5/00** (2006.01)
**H04L 5/14** (2006.01) **H04L 25/20** (2006.01)
**H04W 52/14** (2009.01) **H04W 72/02** (2009.01)
**H04W 72/0453** (2023.01) **H04W 88/04** (2009.01)
**H04W 16/10** (2009.01)

(52) Cooperative Patent Classification (CPC):
**H04W 88/04; H04B 1/005; H04L 5/0007;**
**H04L 5/003; H04L 5/14; H04W 16/14;**
**H04W 52/143; H04W 72/02;** H04W 16/10;
H04W 72/0453; H04W 72/51

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 GB 202320048**

(71) Applicant: **Nokia Technologies Oy
02610 Espoo (FI)**

(72) Inventors:
• **NIELSEN, Kim
  Storvorde (DK)**
• **JALILI, Feridoon
  Gistrup (DK)**
• **JACOBSEN, Thomas Haaning
  Nørresundby (DK)**
• **ABREU, Renato Barbosa
  Aalborg (DK)**

(74) Representative: **Nokia EPO representatives
Nokia Technologies Oy
Karakaari 7
02610 Espoo (FI)**

(54) **SUB-NETWORK BANDS DETERMINATION**

(57) Embodiments of the present disclosure relate to a terminal device, a method, an apparatus, and a medium for determining sub-network bands. In an aspect, a terminal device determines one or more common bands among supported operating bands received from a network node and at least one sub-network device. The terminal device determines one or more available bands from the one or more common bands. The terminal device determines one or more candidate bands to be used for creating the at least one sub-network. With the embodiments in the present disclosure, the terminal device can avoid bands which may cause or suffer channel access failures due to operation of other radio access technologies, and the terminal device can select the sub-network spectrum based on least co-existence and least self-interference impacts and establish the sub-network at this spectrum location.

500

DETERMINE, AT A TERMINAL DEVICE, ONE OR MORE COMMON BANDS AMONG SUPPORTED OPERATING BANDS RECEIVED FROM A NETWORK NODE AND AT LEAST ONE SUB-NETWORK DEVICE, WHEREIN THE AT LEAST ONE SUB-NETWORK DEVICE IS TO BE SERVED BY THE TERMINAL DEVICE IN AT LEAST ONE SUB-NETWORK — 502

DETERMINE, AT THE TERMINAL DEVICE, ONE OR MORE AVAILABLE BANDS FROM THE ONE OR MORE COMMON BANDS, WHEREIN THE ONE OR MORE AVAILABLE BANDS ARE BANDS THAT THE TERMINAL DEVICE AND THE NETWORK NODE JOINTLY SUPPORT AND ARE NOT ACTIVE AS A CELL FOR COMMUNICATION WITH THE NETWORK NODE — 504

DETERMINE, AT THE TERMINAL DEVICE, BASED ON HARDWARE CAPABILITIES OF THE TERMINAL DEVICE, FROM THE ONE OR MORE AVAILABLE BANDS, ONE OR MORE CANDIDATE BANDS TO BE USED FOR CREATING THE AT LEAST ONE SUB-NETWORK — 506

FIG. 5

EP 4 580 234 A1

**Description**

**FIELD**

Various example embodiments generally relate to the field of communication, and in particular, to a terminal device, a method, an apparatus and a computer readable storage medium for determining sub-network bands.

**BACKGROUND**

Short range sub-network is a promising component to meet the extreme performance requirements in terms of latency, reliability and/or throughput envisioned for certain the sixth generation (6G) short-range scenarios. The short-range sub-networks are generally installed in/on/around specific entities e.g., in-vehicle, in-body, in-house, etc., to provide life-critical data service with extreme performances over the local capillary coverage.

The sub-networks have the following pivotal properties and technical features: i) support of extreme performance requirements in terms of latency, reliability and/or throughputs; (ii) low transmit power, which implies limited coverage range (e.g., in the order of few meters); (iii) star or tree topology with one sub-network access point (AP) and one or more sub-network user equipments (UEs) under AP's control; (iv) overall mobility of AP and associated sub-network devices, but limited mobility across different sub-networks; and (v) part of 6G network and must continue to work also when out of network coverage.

**SUMMARY**

In general, example embodiments of the present disclosure provide a solution for determining sub-network bands. For example, the solution provided by the example embodiments of the present disclosure can avoid bands which may cause or suffer channel access failures due to operation of other radio access technologies (RATs), and the UE can select the sub-network spectrum based on least co-existence and least self-interference impacts and establish the sub-network at this spectrum location.

In a first aspect, there is provided a terminal device. The terminal device may comprise at least one processor and at least one memory storing instructions that, when executed by the at least one processor, cause the terminal device at least to: determine one or more common bands among supported operating bands received from a network node and at least one sub-network device, wherein the at least one sub-network device is to be served by the terminal device in at least one sub-network; determine one or more available bands from the one or more common bands, wherein the one or more available bands are bands that the terminal device and the network node jointly support and are not active as a cell for communication with the network node; and determine, based on hardware capabilities of the terminal device, from the one or more available bands, one or more candidate bands to be used for creating the at least one sub-network.

In a second aspect, there is provided a method. The method may comprise: determining, at a terminal device, one or more common bands among supported operating bands received from a network node and at least one sub-network device, wherein the at least one sub-network device is to be served by the terminal device in at least one sub-network; determining one or more available bands from the one or more common bands, wherein the one or more available bands are bands that the terminal device and the network node jointly support and are not active as a cell for communication with the network node; and determining, based on hardware capabilities of the terminal device, from the one or more available bands, one or more candidate bands to be used for creating the at least one sub-network.

In a third aspect, there is provided an apparatus. The apparatus may comprise: means for determining, at a terminal device, one or more common bands among supported operating bands received from a network node and at least one sub-network device, wherein the at least one sub-network device is to be served by the terminal device in at least one sub-network; means for determining one or more available bands from the one or more common bands, wherein the one or more available bands are bands that the terminal device and the network node jointly support and are not active as a cell for communication with the network node; and means for determining, based on hardware capabilities of the terminal device, from the one or more available bands, one or more candidate bands to be used for creating the at least one sub-network.

In a fourth aspect, a non-transitory computer readable medium comprising program instructions for causing an apparatus to perform a method comprising: determining one or more common bands among supported operating bands received from a network node and at least one sub-network device, wherein the at least one sub-network device is to be served by the terminal device in at least one sub-network; determining one or more available bands from the one or more common bands, wherein the one or more available bands are bands that the terminal device and the network node jointly support and are not active as a cell for communication with the network node; and determining, based on hardware capabilities of the terminal device, from the one or more available bands, one or more candidate bands to be used for creating the at least one sub-network.

In a fifth aspect, there is provided a computer program comprising instructions, which, when executed by an apparatus, cause the apparatus at least to: determine one or more common bands among supported operating bands received from a network node and at least one sub-network device, wherein the at least one sub-network device is to be served by the terminal device in at least one sub-network; determine one or more available bands from the one or more common bands, wherein the one or more available bands are bands that the terminal device and the network node jointly support and are not active as a cell for communication with the network node; and determine, based on hardware capabilities of the terminal device, from the one or more available bands, one or more candidate bands to be used for creating the at least one sub-network.

In a sixth aspect, there is provided a terminal device. The terminal device may comprise first determining circuitry configured to determine one or more common bands among supported operating bands received from a network node and at least one sub-network device, wherein the at least one sub-network device is to be served by the terminal device in at least one sub-network; second determining circuitry configured to determine one or more available bands from the one or more common bands, wherein the one or more available bands are bands that the terminal device and the network node jointly support and are not active as a cell for communication with the network node; and third determining circuitry configured to determine, based on hardware capabilities of the terminal device, from the one or more available bands, one or more candidate bands to be used for creating the at least one sub-network.

It is to be understood that the summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, in which:

FIG. 1A illustrates example network environment in which example embodiments of the present disclosure may be implemented;

FIGS. 1B-1D illustrate example block diagrams of UE with front-end modules and antennas;

FIGS. 1E-1F illustrate example transceiver paths;

FIGS. 1G-1H illustrate example intra-band carrier aggregations;

FIG. 1I illustrates an example Wi-Fi and cellular spectrum;

FIG. 1J illustrates example sub-network use cases;

FIG. 1K illustrates an example architectural of sub-networks;

FIG. 1L illustrates an example diagram of UE with sub-network devices supporting single and dual band operation;

FIG. 1M illustrates an example diagram of transceiver path selection and assignment;

FIG. 2 illustrates an example signaling process of determining sub-network bands in accordance with some example embodiments of the present disclosure;

FIG. 3 illustrates example supported bands across the network, UE and sub-network devices;

FIG. 4 illustrates an example flowchart of a UE method for sub-network(s) in licensed available spectrum in accordance with some example embodiments of the present disclosure;

FIG. 5 illustrates an example flowchart of a method for determining sub-network bands in accordance with some example embodiments of the present disclosure;

FIG. 6 illustrates an example simplified block diagram of a device that is suitable for implementing embodiments of the present disclosure; and

FIG. 7 illustrates an example block diagram of an example computer readable medium in accordance with some embodiments of the present disclosure.

Throughout the drawings, the same or similar reference numerals represent the same or similar element.

## DETAILED DESCRIPTION

Principles of the present disclosure will now be described with reference to some example embodiments. It is to be understood that these embodiments are described only for the purpose of illustration and to help those skilled in the art to understand and implement the present disclosure, without suggesting any limitation as to the scope of the disclosure. The disclosure described herein may be implemented in various manners other than the ones described below.

In the following description and claims, unless defined otherwise, all technical and scientific terms used herein have the same meaning as commonly understood by one of ordinary skills in the art to which the present disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It may be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band Internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) communication protocols, the 6G communication protocols and/or beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial, a relay node, an integrated access and backhaul (IAB) node, and/or industrial wireless networks, and the like. In the following description, the terms "terminal device", "communication device", "terminal", "user equipment" and "UE" may be used interchangeably.

As used herein, the term "resource", "transmission resource", "resource block", "physical resource block" (PRB), "uplink (UL) resource" or "downlink (DL) resource" may refer to any resource for performing a communication, for example, a communication between a terminal device and a network device, such as a resource in time domain, a resource in frequency domain, a resource in space domain, a resource in code domain, a resource in a combination of more than one domain or any other resource enabling a communication, and the like. In the following, a resource in time domain (such as, a subframe) will be used as an example of a transmission resource for describing some example embodiments of the present disclosure. It is noted that example embodiments of the present disclosure are equally applicable to other resources in other domains.

As discussed above, supporting the feature and creation of sub-network that is foreseen to be increasingly important for future users. As an example, based on 6G, the ever-increasing radio paths in smartphone designs allow further utilization of spectrum at the UE assisted- or beyond the control of the network. Therefore, the present disclosure proposes a UE front-end design and configuration for one or more simultaneous active systems, in which the UE serves as both device in a network, and AP creating a subnetwork. The implementation described herein would be applicable to any device that can support a sub-network, within an existing network.

The example embodiments of the present disclosure provide a solution for determining sub-network bands, especially, for determining frequency allocation in licensed available spectrum for sub-network. According to the example embodiments of determining sub-network bands as provided in the present disclosure, a terminal device can create the sub-network without network involvement, and the determined sub-network bands have less self-interference and less co-existence issues.

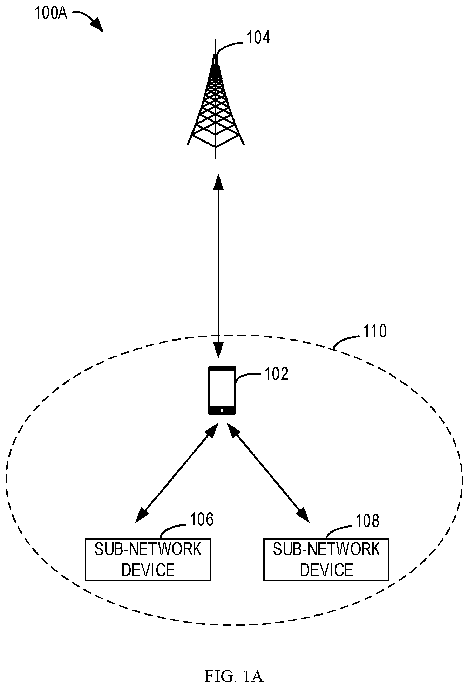

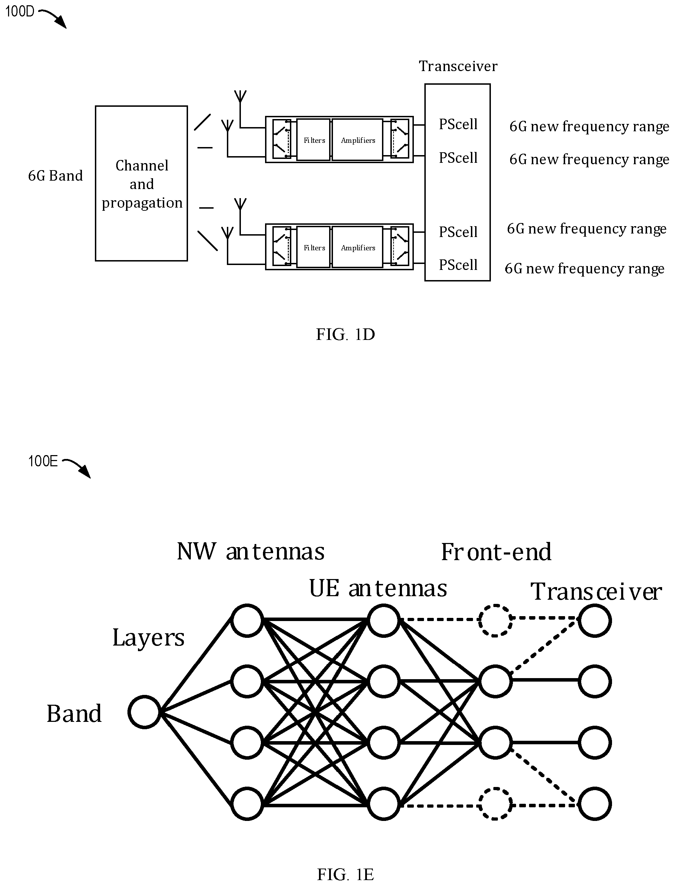

For illustrative purposes, principles and example embodiments of the present disclosure of determining sub-network bands will be described below with reference to FIG. 1A- FIG. 7. However, it is to be noted that these embodiments are given to enable the skilled in the art to understand inventive concepts of the present disclosure and implement the solution as proposed herein, and not intended to limit scope of the present application in any way.

Reference is made to FIG. 1A, which illustrates an example of a communication network 100A in which some example embodiments of the present disclosure may be implemented. As illustrated in FIG. 1A, the communication network 100A includes a terminal device (which may also be referred to as user equipment or UE) 102 and a network device (which may also be referred to as a gNB or base station) 104. Although the terminal device 102 and the network device 104 are shown in FIG. 1A, the numbers of the network devices and the terminal devices are not limited. In other words, there may be one or more network devices and one or more terminal devices in the communication network 100A.

In communication network 100A, UE 102 may be, for example, implemented as a smartphone acting as an AP. The UE 102 needs to determine the configuration of the sub-network based on information available to the UE 102. The sub-network 110 may comprise sub-network devices 106 and 108. The sub-network 110 will be created using the determined configuration for communication between the UE 102 and the sub-network devices 106 and 108. The sub-network devices 106 and 108 may vary depending on different sub-network types, such as sensors or pacemakers and so on.

It is to be understood that the number of devices and their connection relationships and types shown in FIG. 1A are for illustrative purposes without suggesting any limitation. The communication system 100A may comprise any suitable number of devices adapted for implementing embodiments of the present disclosure.

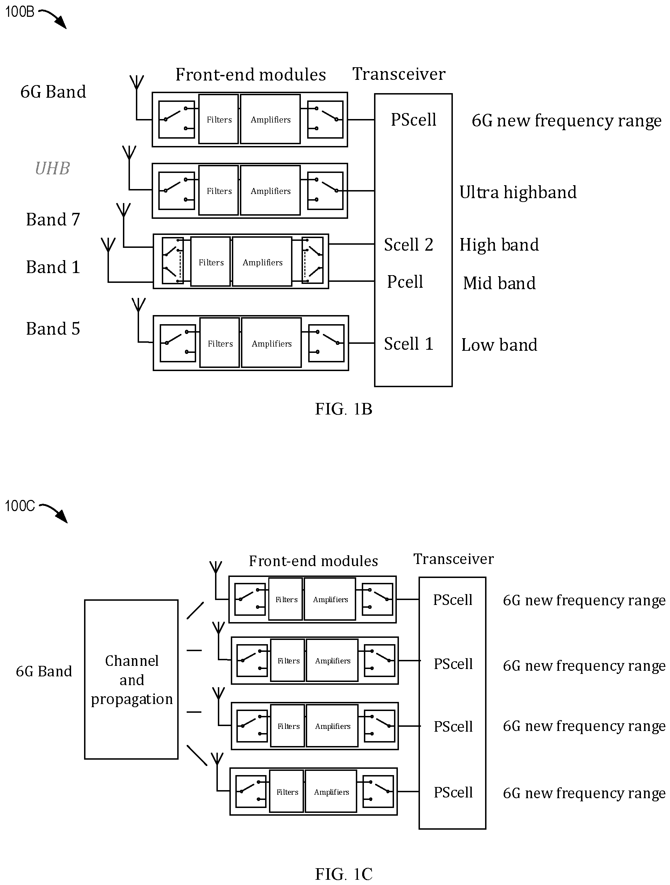

Some practices in especially UE smartphone design that scales the number of parallel radio connections for maximum bandwidth utilization will be described with reference with FIGS. 1B-1M. These will be helpful for understanding the solution of the present disclosure. Reference is made to FIGS. 1B-1D, which illustrates example block diagrams of UE with front-end modules and antennas. As shown in FIG. 1B, the UE supports both uplink and downlink. The UE may comprise front end modules that connects between the RF transceiver and the antennas. These front-end modules are designed to cover the band-groups (frequency sections). Considering the combinations of bands, FIG. 1B shows a block diagram connecting antennas to the UE transceiver.

From FIG. 1B, it is seen that each front-end module supports one or more dedicated antennas, and that the antennas map frequency sections (bands to the left) into transceiver paths that allow the transceiver connections on several frequency sections simultaneously. The case of DC_n1A-n5A-n7A_6Gnn is shown, including "spare" capacity at the ultra highband (UHB), that is not mapped inside the Transceiver box as an example for 6G analogy. Inside the transceiver there's a mapping that the network controls for assigning Primary cell (Pcell), primary secondary cell (PScell) and secondary cells (Scell), indicating these are active, whereas the UHB is inactive. A UE may comprise one or more front-end modules that allow one or more simultaneous activation of frequency separated bands of same or different band-groups. The type of carrier aggregation (CA) shown in this subsection is commonly known as interband carrier aggregation. It can be combined with intra-band CA.

Reference is made to FIGS. 1C-1D, which illustrate block diagram of UE with front-end modules and antennas for the same frequency of operation A: dedicated FE modules, and operation B: with two path FE modules. Operations A and B are both using examples of MIMO on a new 6G frequency range, but this may also be existing/currently known frequency ranges.

A UE may comprise front end modules that connect between the RF transceiver and the antennas of the same operational frequency. This multiplies the UEs capability to connect on the same time and frequency occurrences. This type of connection is called multiple input multiple output (MIMO) and it is a way to increase the data transfer capacity of the same time and frequency occurrences. The methods for transmitting and receiving in these signal-conditions is not relevant to the present disclosure, but the block-diagram that enables MIMO in a 4x4 example in FIG. 1C is established for better understanding.

Under the right channel and propagation conditions a UE with uplink- and downlink capability of 4x4 MIMO will be able to transmit or/and receive four times inside the same spectrum due to the existence of 4 un-correlated multi-paths within the channel. This is called a 4-layer MIMO connection. A UE has multiple transceiver paths of the same operational frequency to comply with MIMO connectivity and that each path requires a dedicated antenna of the same operational frequency.

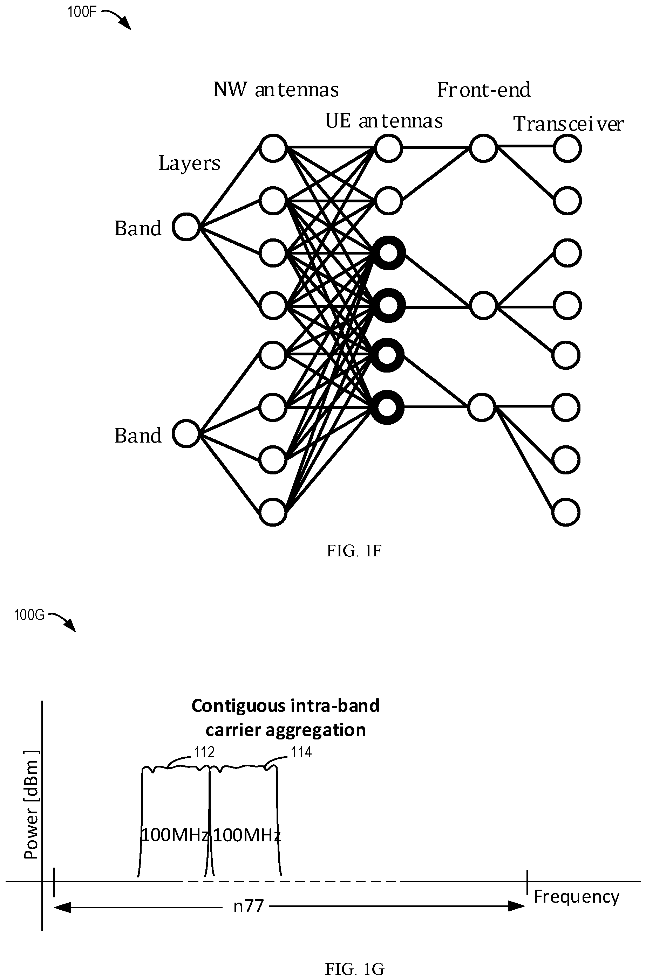

Reference is made to FIGS. 1E-1F, which illustrate example transceiver paths. FIG. 1E shows the single band transceiver paths 100E, and FIG. 1F shows two-band example with 4 shared antennas 100F. Combining the minimum set of CA/ dual connectivity (DC) and MIMO a presentation of the transceiver paths could be illustrated as the connections for one band to the left and two bands for the connections to the right having 4 shared antennas connecting to two bands of different band-groups in FIGS. 1E-1F. Antenna sharing is achieved through dual resonance and use of diplexer/triplexer/quadruplexer to separate the signals towards the respective front-end modules shown as thick lined circles. There is a relation between the bands mapped to layers that must match the transceiver nodes.

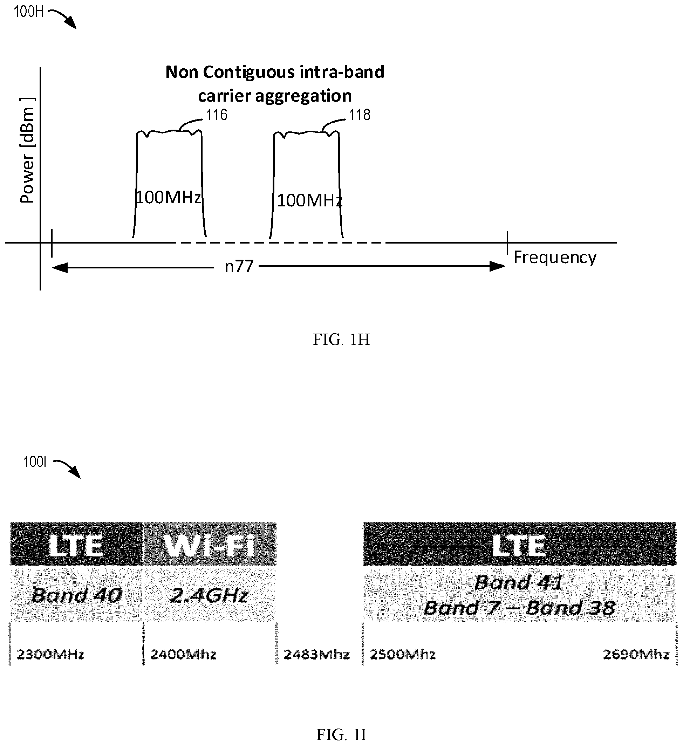

Reference is made to FIGS. 1G-1H, which illustrate example intra-band carrier aggregations. FIG. 1G shows contiguous intra-band with two 100MHz channels, and FIG. 1H shows Non-contiguous intra-band with two 100MHz channels. There is no gap between channel 112 and channel 114 in FIG. 1G. There is a gap between channel 116 and channel118 in FIG. 1H.

The NodeB (NB) defines a channel bandwidth inside the cell which serves the UEs. This channel bandwidth can be from 1.4MHz in LTE to 400 MHz in frequency 2 (FR2) new radio (NR) but may be of any bandwidth serving any type of communication system. Although the NB has a defined channel bandwidth there is more to utilization of the channel bandwidth. Additionally, a NB may increase the available spectrum through intra-band carrier aggregation provided the operator owns the license to the spectrum.

Another level of complexity in allocation of spectrum/frequency resources is bandwidth parts (BWP). The purpose of BWP is more for UE rather than for Network, especially for low end UEs which cannot afford to such a wideband operation. In most case, NR would operate in very wideband and there wouldn't be any issues for the network (gNB) and high end UEs to handle the full operating band, but it cannot expect every type of UE to be able to work with this kind of wideband. Inside a channel bandwidth there is another level of granularity that allows BWPs to be used as lesser clusters of resource blocks. This may be regarded as frequency division multiplexing (FDM).

Further, there is also an aspect of time division multiplexing (TDM), which in contrary to FDM above slices the operation in time division, which enables different modes of operation and services relative to a timeline. The granularity of the time division can again be different, but the system may share the same frequency of operation and divide the time to service multiple communication links within the same frequency of operation.

Based on the previous discussions with reference to FIGS. 1B-1H, it could seem that there's no limit to the number of connections a UE may be granted and that this simply is scaling as technology allows expansion of hardware. This is however not the case and besides the obvious reason of size and cost of a product other reasons are captured, which will be described with reference to FIG. 1I.

Reference is made to FIG. 1I, which illustrates an example Wi-Fi and cellular spectrum 100I. As part of the UE hardware design and the requirements tied to the cellular/wireless communication system is the path loss, which determines the range and distance the radio access technology (RAT) serves. A communication system with an organic user is not to be harmed from radiation of radio waves, for which reason a finite level of energy is to be emitted at the UE. This could be called the power class. The UE has ways of dealing with the path loss. In the transmitter the UE will adjust the output power, so that it matches the requirements of signal strength at the NB. This also limits that any-and-all UEs inside a cell don't transmit with more power than the UE next to it, since the NB controls the UEs output power levels. In close distance to the NB the UE will typically transmit at lowest power level, while at cell edge it will transmit at maximum output power (according to power class).

The UE receiver is a bit different. The receiver has a dynamic range in which it can receive the downlink signal from the NB. Some receivers have gain steps to adjust the input signal-to-noise and interference level, which allows the UE to tolerate strong interference without saturating. The path loss is simply regarded as a "level-knob" determining the signal strengths in both uplink and downlink. This path loss is dependent on the antenna directivity of the UE among others, which means that a UE with more antennas will experience different path loss at each antenna. Path loss may lead to some UE antennas, not being of use to the communication link, due to excessive path loss.

Noise is also present in communication systems. When the path loss becomes large the signal power level approaches the noise level. This will reduce the signal-to-noise ratio (SNR). In advanced communication systems signal-to-noise-ratio allows different throughput conditions, typically achieved using a variety of modulation schemes. SNR results in different conditions of throughput.

Interference will affect the performance of the communication system. Interference is here regarded as an external-generated source, that the UE has no control of. Often interference is combined with noise as signal-to-interference and noise ratio (SINR). Both noise and interference are dependent on the antenna link and direction. A UE may therefore experience differences in SINR across antennas and transceiver paths. SINR is specific to each path a signal is transmitted or received by the UE.

Besides the challenges explained above, the UE also needs to deal with yet another issue that arises inside the UE as it is engaged in more simultaneous modes of operation. UE co-existence issues arise as the UE activates more than one RAT. The most common co-existence issue arises when Wi-Fi and cellular modems simultaneous operate as shown in FIG. 1I. Some simultaneously operated RAT may cause undesired co-existence issues that can lead to performance degradations and even link loss.

Another issue the UE suffers is self-interference. This issue arises in CA/DC when the UE has more than one band active. It is a known issue in the 3rd generation partnership project (3GPP)/Cellular where the UE is allowed relaxed performance requirements as the only mitigation means. In essence the UE will only work poorly in the bands of operation that is affected by self-interference. A UE can have methods to determine that it is suffering of self-interference. A source to self-interference is always high UE output power of the band or bands of operation that presents the aggressor(s) (fundamental tone or harmonics/spectrum emission). Antennas and transceiver paths can be severely impacted in performance during simultaneous activity that could render the transceiver paths useless.

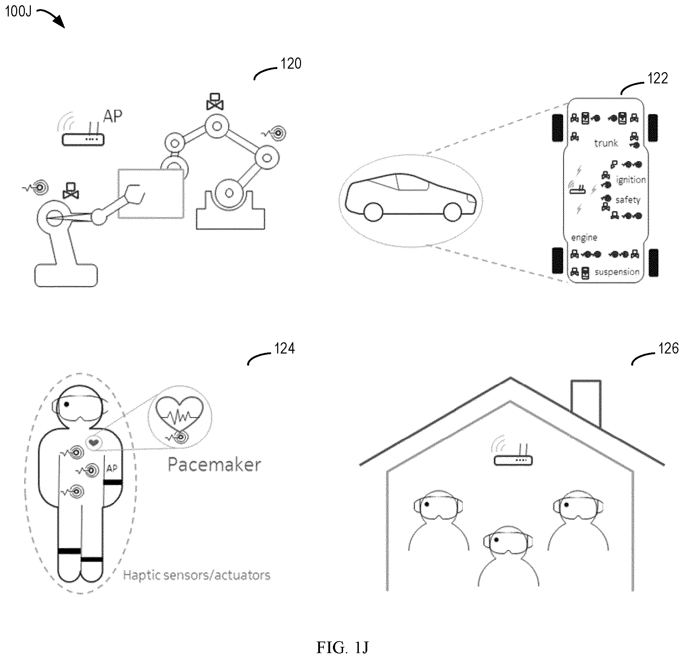

Reference is made to FIG. 1J, which illustrates example sub-network use cases 120, 122, 124 and 126. Use case 120 shows In-robot/in-production module sub-network. Use case 122 shows in-vehicle sub-network. Use case 124 shows in-body sub-network. Use case 126 shows in-house sub-network.

The system design for sub-network shall take the above technical features into account. In particular, the use cases of in-robot/in-production module sub-networks and in-vehicle sub-networks have extreme performance requirements in both reliability (up to 6 nines or more) and latency (down to the level of 100us or even/ below), e.g., for the high demanding periodic deterministic communication services which may be the most challenging scenarios in 6G system.

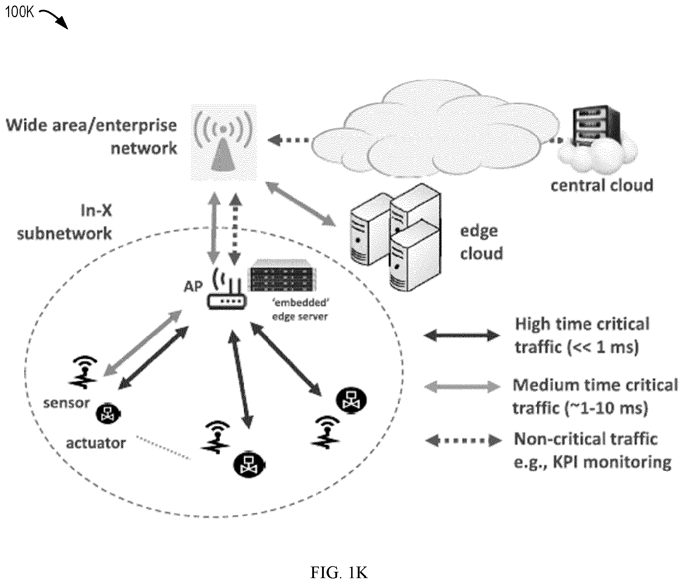

Reference is made to FIG. 1K, which illustrates an example architectural 100K of sub-networks. FIG. 1K shows the architectural aspects for sub-networks where the sub-network AP, on the one hand, serves and manages the sub-network devices in the capillary sub-network coverage, while on the other hand it is connected to the BS of the 6G WAN, which could to a certain extent control and coordinate different sub-networks. Here an In-X sub-network is used to describe a sub-network which operated within a specific entity, where X represents everything.

Another perspective to take on the list of arguments above, is then also to argue why it would not be sufficient if sub-networks is only realized by The Institute of Electrical and Electronics Engineers (IEEE) technologies.

The first argument is that it can avoid competing technologies in the same 6G smartphone, or in other words, the 6G smartphone can be designed to be able to seamlessly operate its Uu interface while also operating the 6G sub-network. This also means that the smartphone, by design, can avoid in-device coexistence issues that naturally arise between two separate RATs being supported by the same UE when simultaneous activity is demanded. This in turn, results in unpredictable and unbounded performance bounds, i.e., it would not be possible to give performance guarantees for both the 3GPP network and the sub-network.

The second argument is that there would be no single entity that can validate the integrity of the sub-network devices and APs capabilities. This would most likely be done within company specific ecosystems instead, hence there would be an "Device vendor1" sub-network and then a "Device vendor 2" sub-network. This means that security of devices is left for the particular ecosystems and in turn this means that the options for the consumer are drastically limited. Apart from security, one can also imagine that this integrity entity would keep track of authenticated devices and hence the sub-network user can avoid concerns about device integrity and (re-)pairing sub-network devices.

The third argument is the possible lack of an inter sub-network coordination interface (and centralized management entity). A centralized entity has been proven to be the most efficient solution to achieve high performance in a densely deployed scenario, whereas the performance of sub-networks in a distributed deployment, would be significantly harmed without an inter sub-network interface where it is fully standardized how each sub-network AP behaves. Consider existing Wi-Fi solutions where coexistence between Wi-Fi networks is left for the listen-before-talk procedure and inter Wi-Fi APs coordinate using proprietary solutions (non-standardized) in e.g., mesh networks.

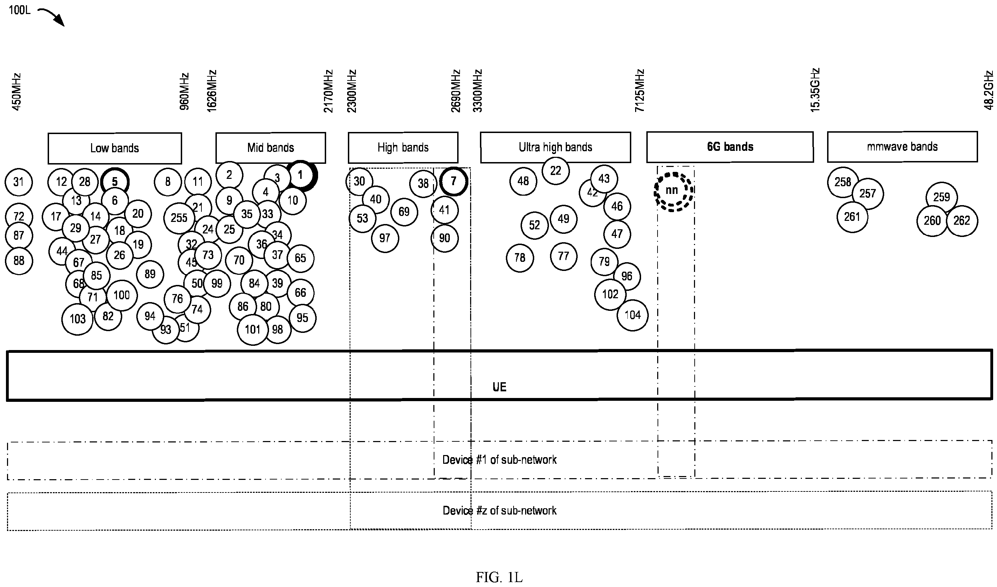

Reference is made to FIG. 1L, which illustrates an example diagram 100L of UE with sub-network devices supporting single and dual band operation. A UE may be limited in supported bands as seen from the sub-network devices that indirectly lowers the options for sub-networking. This could be due to single or dual band sub-network devices as shown in FIG. 1K.

There is clearly an opportunity for 6G sub-networks as it means that not all hardware is utilized at the same time by the AP, so the following observations is made to motivate smart hardware reuse for 6G sub-networks: (i) not all transceiver paths (frequencies of simultaneous operation) will be used at the 6G smartphone (AP); (ii) transceiver paths within the UE accessible to an operator is increasing with MIMO and carrier aggregation that is achieved through expansion of UE hardware capabilities; (iii) there is a correlation between the number of component carriers the UE can support and the path loss between the UE and the base station, in both downlink (due to a decreasing SINR) and particularly in uplink (where the UE can become power limited); and (iv) interference distortion problems scales non-linearly with the transmission power, this opens for opportunities for new coexistence mechanisms when considering a low power 6G sub-network device.

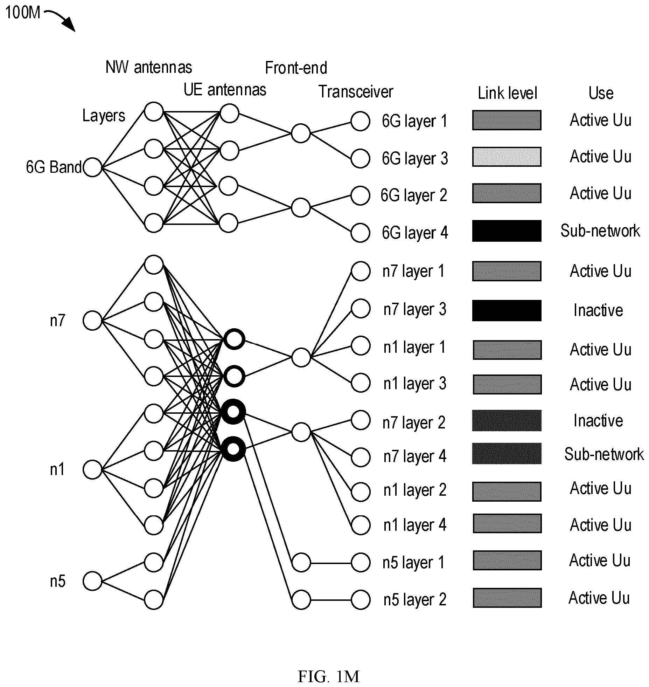

Reference is made to FIG. 1M, which illustrates an example diagram 100M of transceiver path selection and assignment. There are no known solutions that considers radio and hardware aspects inside a UE such as the smartphone to shape and define the sub-network with the UE acting as the AP. It is not a simple and trivial configuration without inputs and measures that assist a UE in becoming an AP, and making the sub-network fit into existing licensed spectrum.

Considering that a UE that is required to create and serve as AP for a set of devices the UE must identify and configure the sub-network. The UE has several transceiver paths, as shown for the example case in FIG. 1M, but there is a big dilemma in how and where to configure this sub-network. It is insufficient to simply consider link level power, and a more generic method is required for the UE to act as AP.

Therefore, there is a need to consider the case that how a UE (such as a smartphone) creates and serves as an AP in a sub-network that must coincide with the cellular system, and the case that how the UE determines spectrum resources that regards the UE hardware (HW) capability, and which are available from the network (NW) perspective, without the UE choosing a setup that is impacted by self-interference or co-existence problems.

Therefore, the present disclosure proposes a solution of how a UE determining the configuration of the sub-network based on information only available to the UE. For example, The UE may have a list of band combinations which the UE hardware and software supports. For cellular devices, this is extractable by reading the UE capability list from the UE, and for non-cellular systems it is expected similar information is available to the device. This list is available for the UE to determine its hardware capabilities. The UE may know its RF front-end design and transceiver path routing from this list.

The UE may receive a similar list from the sub-network device(s) that is to be supported by the UE, i.e., from the devices that the UE may serve as their sub-network AP. To identify common bands, the UE may correlate and create a common-bands list between the UE and the sub-network devices. This common-bands list may be a subset from both the UE and the sub-network devices.

Based on the common-bands list, the UE may identify the supported frequencies towards the NW, which could be through the Uu interface. From here also active cells to be monitored is found. This information is then used by the UE to find available spectrum resources that is on the common-bands list, but not active as a cell or at least not as primary cell. When one or more spectrum resources are found to satisfy the conditions of available spectrum, the UE may check for interference conditions of the candidate spectrum.

The UE may also check for co-existence issues, which means it checks the candidate spectrum towards other RAT and prioritizes based on minimum impact. The UE may avoid bands which may cause or suffer channel access failures due to operation of other RATs. The UE may select the sub-network spectrum based on least co-existence and least self-interference impacts and establishes the sub-network at this spectrum location.

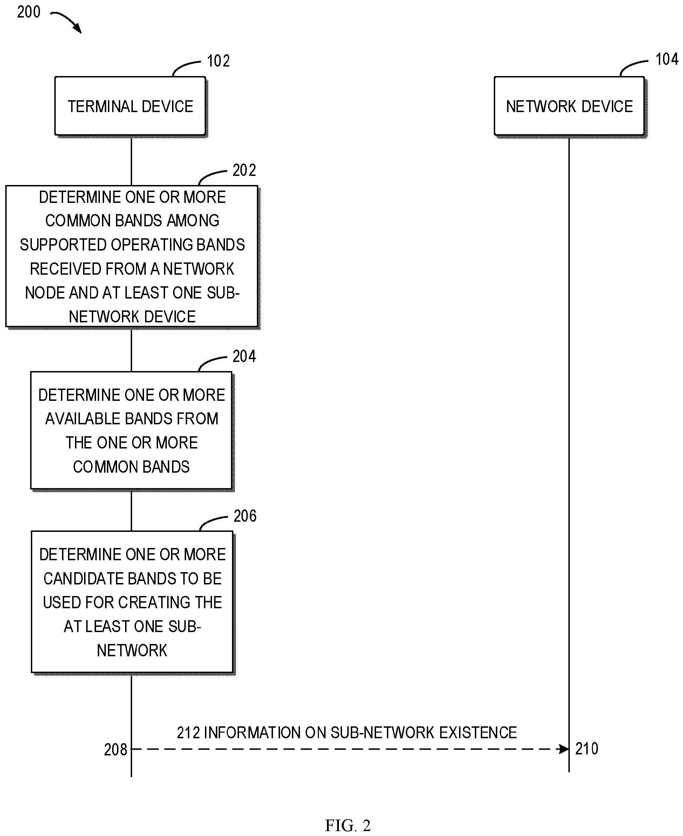

Reference is made to FIG. 2, which illustrates an example signaling process 200 of determining sub-network bands in accordance with some example embodiments of the present disclosure. The terminal device 102 determines (202) one or more common bands among supported operating bands received from a network node and at least one sub-network device. The at least one sub-network device is to be served by the terminal device in at least one sub-network.

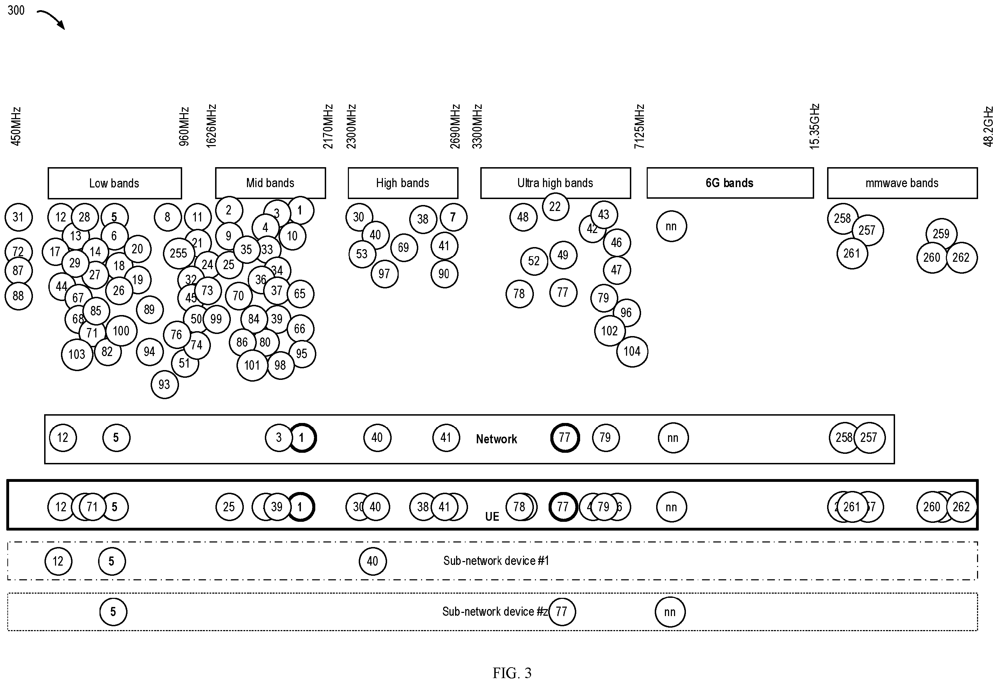

For example, referring to FIG. 3, which illustrates example supported bands across the network, UE and sub-network devices. As shown in FIG. 3, the network device 104 is shown to support several spectrum allocations, where 3GPP bands are shown for the exemplary case. These network spectrum allocations can be operator licensed bands or regional bands from other operators, that the UE 102 is to report signal properties for. The network device 104 provides this list of spectrum allocation to the UE 102 upon initial access and will request measurements of these spectrum parts from the UE 102. Additionally, the network device 104 will establish a connection with the UE 102 when connection services are required. The network device 102 has granted the 2 CA (or DC) connection at bands 1 and 77, which means the UE 102 is aware of licensed and active bands (spectrum) at the network.

The UE 102 can service one or more sub-network devices with same or different hardware capabilities that shape the supported bands in the sub-network devices 1 to z. Device #1 has support for licensed bands 5, 12 and 40, while device #z has support for bands 5, 77 and a 6G band. Only the UE 102 is aware of all these devices and hardware capabilities, and it is based on this information the UE 102 will serve as AP to the sub-network devices. In some implementation the UE 102 may know the frequencies from standardized sub-network bands or informed by sub-network devices, e.g., via beacon/broadcast signals, or via a previous configuration (i.e., built in from the factory or when it was last connected).

The UE 102 therefore identifies that band 5 will serve as common-band to serve both sub-network devices if the sub-network devices are of spectrum demands that allow the UE 102 to share the spectrum resources between the two sub-network devices. Alternately the UE 102 may establish two sub-networks (one on each band) or a single sub-network operating on both bands.

Referring back to FIG. 2, the terminal device 102 determines (204) one or more available bands from the one or more common bands. The one or more available bands are bands that the terminal device and the network node jointly support and are not active as a cell for communication with the network node.

In some example embodiments, the UE 102 may determine how to support the two sub-network devices based on their data link requirements. If the data link can be contained within the available spectrum of the unused licensed band the UE 102 can create the joint sub-network on a single band (case 1) or if the sub-network demands exceed spectrum capacity based on data link demands the UE 102 may multiplex across more than one unused licensed band (case 2). Case 1 and case 2 will be described later and separately.

The terminal device 102 determines (206), based on hardware capabilities of the terminal device, from the one or more available bands, one or more candidate bands to be used for creating the at least one sub-network. For example, to determine the best candidate bands for the sub-network, the UE 102 may additional check if any of the spectrum allocations have co-existence issues due to different active RAT, or self-interference issues from internal table formats of maximum sensitivity degradation values shown in TABLE 1.

TABLE 1 Example case showing how many maximum sensitivity degradation (MSD) numbers may determine the single MSD value in a 3 CA combination

| 2DL | 3DL | 1UL | 2UL | UL Harm | Harm Mix | CrossB | IMD(2 UL/2DL ) | IMD(2UL /3DL) | MSD Value |
|---|---|---|---|---|---|---|---|---|---|
| CA_nA-nB | - | nA | - | 1 | 2 | 3 | - | - | 1;2;3 |
| CA_nA-nB | - | nB | - | 4 | 5 | 6 | - | - | 4;5;6 |
| CA_nA-nC | - | nA | - | 7 | 8 | 9 | - | - | 7;8;9 |
| CA_nA-nC | - | nC | - | 10 | 11 | 12 | - | - | 10;11;12 |
| CA_nB-nC | - | nB | - | 13 | 14 | 15 | - | - | 13;14;15 |
| CA_nB-nC | - | nC | - | 16 | 17 | 18 | - | - | 16;17;18 |
| CA_nA-nB | - | - | CA_nA-nB | 1;4 | 2;5 | 3;6 | 19 | - | 1;2;3;4;5;6;19 |
| CA_nA-nC | - | - | CA_nA-nC | 7;10 | 8;11 | 9;12 | 20 | - | 7; 8; 9;10;11;12; 20 |
| CA_nB-nC | - | - | CA_nB-nC | 13;16 | 14;17 | 15;18 | 21 | - | 13;14;15;16;17;18;21 |
| - | CA_nA-nB-nC | nA | - | 1;7 | 2;8 | 3;9 | - | - | 1;2;3;7;8;9 |
| - | CA_nA-nB-nC | nB | - | 4;13 | 5;14 | 6;15 | - | - | 4;5;6;13;14;15 |
| - | CA_nA-nB-nC | nC | - | 10;16 | 11;17 | 12;18 | - | - | 10;11;12;16;17;18 |
| - | CA_nA-nB-nC | - | CA_nA-nB | 1;4;7;13 | 2; 5; 8; 14 | 3;6;9;15 | 19 | 22 | 1;2;3;4;5;6;7;8; 9;13;14;15;19;22 |
| - | CA_nA-nB-nC | - | CA_nA-nC | 1;7;10;16 | 2;8;11;17 | 3;9;12;18 | 20 | 23 | 1;2;3;7;8;9;19;11; 12; 16; 17; 18;20;23 |
| - | CA_nA-nB-nC | - | CA_nB-nC | 4;10;13;1 6 | 5;11;14;1 7 | 6;12;15;1 8 | 21 | 24 | 4;5;6;10;11;12;13;14 ;15;16;17;18;21;24 |

From TABLE 1, it is seen that how a 3 CA/DC combination can have different MSD values depending on the self-interference mechanism that affects a UE. Column 1 represents the 2 band downlink combination, the column 2 represents the 3 band downlink combination, followed by column 3 of single uplink configuration. A UE can support also 2 simultaneous uplinks as shown in column 4. Next columns 5 to 9 show various types of self-interference mechanisms. Each of these types may be the reason to have unique MSD values in the last column, which is at least the same value as found in the 3GPP specification. The numbers in this column represents individual different values from a first index [1] to a last index [24]. If the UE is better than the specification the MSD value will be less than that found in the 3GPP specification. Based on these tables for all MSD affected band combinations the UE can identify band combinations from the common-bands list and the network supported bands to identify candidate sub-network bands with no, or least MSD value.

Here, now case 1 (Single band sub-network) will be discussed. The UE 102 may service both sub-network devices and identify band 5 as a candidate band. From the UE 102's own hardware capabilities it is capable of supporting the band combination 1+5+77, which means it may check band 5 further for interference issues.

In some example embodiments, the UE 102 may determine, based on one or more interference conditions of the one or more candidate bands, a frequency allocation which has minimum impacts of self-interferences of the one or more candidate bands. For example, by checking TABLES 2-6.

TABLE 2 Self-interference information across band combinations

| CA | UL | ULH | HM | IMD | CB | Total | Aggressor | Aggressor | Aggressor |
|---|---|---|---|---|---|---|---|---|---|
| CA_n1-n5 | n1, n5 | | | | | 0 | | | |
| CA_n1-n77 | n1, n77 | x | | x | | 2 | n1 | | n77 |
| CA_n5-n77 | n5, n77 | x | x | x | | 3 | n5 | n77 | n77 |

TABLE 2 shows what the UE 102 finds based on the table look-ups of the TABLE 1 format of all combinations across the network device 104 supported bands. In TABLE 2, three fallbacks are shown together with the self-interference source and the aggressor (uplink band that cause self-interference). Since the UE 102 must spend 1 UL on the Uu connection, the line entry CA_n1-n77 is obsolete, as this contains both Uu bands leaving none for the sub-network. It is seen that if the UE 102 is assigned UL in n1 there are no 2 CA self-interference issues, while a configuration with the UE 102 assigning uplink in n77 will potentially suffer from uplink harmonic, harmonic mixing or intermodulation self-interference issues.

In some example embodiments, the one or more interference conditions comprise at least one of the following: (i) a combination of the one or more candidate bands with an active band having a minimum MSD value, and the combination is an addition of the one or more candidate bands; (ii) a combination of the one or more candidate bands having a minimum coexistence interference; or (iii) a combination of the one or more candidate bands having a minimum interference disturbance from other RATs. In some example embodiments, a self-interference comprises at least one of the following: an uplink (UL) harmonic self-interference impact or a harmonic mixing MSD.

For example, the following TABLE 3, TABLE 4 and TABLE 5 shows the impact of the self-interference. In TABLE 3, the 4th and 5th UL harmonic falls inside the n77 DL causing between 0.7dB to 10.5dB MSD depending on UL BW and resource block (RB) allocation. Since n5 is to be used for the sub-network, the UE 102 may limit the output power towards the sub-network device so that n77 never suffers from self-interference issues. The UE 102 may simply limit the n5 uplink power that responds to a power drop at the 4th and 5th harmonic respectively.

TABLE 1: UL harmonic self-interference impact (MSD).

| UL band | DL band | UL BW | SCS of UL band | UL RB Allocation | DL BW | MSD | UL/DL fc condition | UL/DL harmonic order |
|---|---|---|---|---|---|---|---|---|
| | | (MHz) | (kHz) | $L_{CRB}$ | (MHz) | (dB) | | |
| n1 | n77 | 5 | 15 | 25 (Rbstart=0) | 10 | 239 | NOTE 2 | UL2/DL1 |
| n1 | n77 | 20 | 15 | 100 (Rbstart=0) | 100 | 138 | NOTE 2 | UL2/DL1 |
| n5 | n77 | 5 | 15 | 16 (Rbstart=0) | 10 | 10.5 | NOTE 4 | UL4/DL1 |
| n5 | n77 | 5 | 15 | 25 (Rbstart=0) | 100 | 1.4 | NOTE 4 | UL4/DL1 |
| n5 | n77 | 5 | 15 | 16 (Rbstart=0) | 10 | 10.4 | NOTE 5 | UL5/DL1 |
| n5 | n77 | 5 | 15 | 25 (Rbstart=0) | 100 | 07 | NOTE 5 | UL5/DL1 |

In TABLE 4, the 4th DL harmonic matches the n77 UL causing between 2.7dB to 5.7dB MSD depending on UL BW and RB allocation.

TABLE 4: Harmonic mixing self-interference impact (MSD).

| UL band | DL band | UL BW (MHz) | SCS of UL band (kHz) | UL RB Allocation $L_{CRB}$ | DL BW (MHz) | MSD (dB) | UL/DL fc condition | UL/DL harmonic order |
|---|---|---|---|---|---|---|---|---|
| n77 | n5 | 10 | 15 | 25 (Rbstart=0) | 5 | [57] | NOTE 8 | UL1/DL4 |
| n77 | n5 | 20 | 15 | 100 (Rbstart=0) | 20 | [27] | NOTE 8 | UL1/DL4 |

Finally, a check towards the IMD is done according to TABLE 5, where the IMD3 in n1 of 18.1dB for UL configuration (n5 + n77) is found and the IMD3 in n77 for UL configuration (n1 + n5) of 15.7 dB is found. The last entry is obsolete, since this is for UL configuration n1+n77, which means no UL for the sub-network and therefore not relevant.

TABLE 5: Intermodulation products (IMD) and self-interference impact (MSD)

| Band / Channel bandwidth / $N_{RB}$ / Duplex mode | | | | | | | | Source of IMD |
|---|---|---|---|---|---|---|---|---|
| NR CA band combination | NR band | UL $F_c$ (MHz) | UL/DL BW (MHz) | UL $L_{CRB}$ | DL $F_c$ (MHz) | MSD (dB) | Duplex mode | |
| CA_n1-n5-n77 | n1 | N/A | 5 | N/A | 2122 | 18.1 | FDD | IMD3 |
| | n5 | 829 | 5 | 25 | 874 | N/A | FDD | N/A |
| | n77 | 3780 | 10 | 50 | 3780 | N/A | TDD | N/A |
| | n1 | 1975 | 5 | 25 | 2165 | N/A | FDD | N/A |
| | n5 | N/A | 5 | N/A | 885 | 3.1 | FDD | IMD5 |
| | n77 | 3405 | 10 | 50 | 3405 | N/A | TDD | N/A |
| | n1 | 1950 | 5 | 25 | 2140 | N/A | FDD | N/A |
| | n5 | 830 | 5 | 25 | 875 | N/A | FDD | N/A |
| | n77 | N/A | 10 | N/A | 3610 | 15.7 | TDD | IMD3 |

In some example embodiments, the UE 102 may determine, based on frequency ranges affected by MSD, the frequency allocation of the one or more candidate bands, and create the sub-network based on the frequency allocation. The UE 102 may determine whether frequency relations between the one or more candidate bands satisfy predetermined frequency relations. If the frequency relations do not satisfy the predetermined frequency relations, the UE 102 may select a corresponding frequency allocation. If the frequency relations satisfy the predetermined frequency relations, the UE 102 may prevent from selecting a corresponding frequency allocation.

In some example embodiments, a frequency relation of an UL harmonic may be associated with an UL frequency including channel bandwidth (CBW) of a first candidate band and/or an active band, a frequency including CBW of a second candidate band and/or the active band, and a first predetermined parameter.

In some example embodiments, a frequency relation of a harmonic mixing may be associated with a frequency including CBW of a first candidate band and/or an active band, a frequency including CBW of a second candidate band and/or the active band, and a second predetermined parameter.

In some example embodiments, a frequency relation of a source of an IMD may be associated with a frequency including CBW of a first candidate band combined with a second candidate band or an active band, a frequency including CBW of a third candidate band or the active band, and a third predetermined parameter.

As an example, the UE 102 may need to check the frequency ranges that are affected by MSD. It may check the frequencies with equations (1) to (4).

Equation (1) is for UL harmonic:

n5 UL frequency (include channel bandwidth (CBW)) * 4 or * 5 = n77 frequency (including CBW) (1)     (1)

Equation (2) is for harmonic mixing:

$$n5 \text{ DL frequency (include CBW)} * 4 = n77 \text{ frequency (including CBW)} \qquad (2)$$

Equation (3) is for IMD3:

n77 frequency (include CBW) - 2* n5 frequency ((include CBW) = n1 frequency ((include CBW) (3) (3)

Equation (4) is for IMD3:

n1 frequency (include CBW) + 2* n5 frequency ((include CBW) = n77 frequency ((include CBW) (4) (4)

Depending on the frequency relations determined by equations (1) to (4), the UE 102 may further rule out self-interference cases which can be done by using MSD free frequency allocation in n5 or take actions to limit n5 UL power according to self-interference case. Lastly, n5 has no co-existence issue with Wi-Fi since n5 is separated in frequency location as seen in TABLE 6.

TABLE 6: n5 frequency band location.

| NR Band | Uplink (UL) operating band | | | Downlink (DL) operating band | | | Duplex Mode |
|---|---|---|---|---|---|---|---|
| | BS receive / UE transmit | | | BS transmit / UE receive | | | |
| | $F_{UL\_low}$ - $F_{UL\_high}$ | | | $F_{DL\_low}$ - $F_{DL\_high}$ | | | |
| n5 | 824 MHz | - | 849 MHz | 869 MHz | - | 894 MHz | FDD |

Based on frequency allocation related to hardware capabilities within the common-bands list and identification of interference and self-interference the UE(AP) will assign the sub-network to a location that is not impacting link performance, and in case it cannot identify such allocation it will limit the output power in the sub-network UL from the AP to avoid IMD MSD. In some example embodiments, the UE 102 may transmit, to the network device 104, information on sub-network existence including information as the frequency allocation, CBW, and power class.

Case 2 (Two-band sub-network) will be described thereafter. The UE 102 may service both sub-network devices and identifies band 5 and the 6G nn band as candidate bands. The reason may be that the UE 102 has the hardware capability to support all these bands simultaneously (See FIG. 1B). From the UE 102's own hardware capabilities it is capable of supporting the band combination 1+5+77+6G nn, which means it may check band 5 and 6G band nn further for interference issues. In Case 1, the band 5 study was made, and this would be done similar here, while another study for the 6G band nn would be required. The two-band combination study is shown in TABLE 7, where the combination of the sub-networks is omitted (strike through), since there cannot be simultaneous activity in both if also the Uu interface has uplink activity and the UE is limited to two bands simultaneous uplink. Only if/when 3TX in uplink is supported this combination would need to be included. Until 3TX is supported the sub-networks are expected to use TDM in the TX from the UE.

TABLE 7: Self-interference information across band combinations.

| CA | UL | UL | HM | IMD | CB | Total | Aggressor | Aggressor | Aggressor |
|---|---|---|---|---|---|---|---|---|---|
| CA_n1-n5 | n1, n5 | | | | | 0 | | | |
| CA_n1-n77 | n1, n77 | x | | x | | 2 | n1 | | n77 |
| CA_n5-n77 | n5, n77 | x | x | x | | 3 | n5 | n77 | n77 |
| CA_n1_6Gnn | n1, 6Gnn | x | | x | | 2 | n1 | - | 6Gnn |
| | | | | | | | - | - | - |
| CA_n77_6Gnn | n77, 6Gnn | x | x | | | 2 | n77 | 6Gnn | - |

The UE 102 may have chosen 6G nn band instead of band 40, since band 40 is subject to co-existence issues (see FIG. 1I). For each of the two sub-network candidate bands the UE 102 may analyze the frequency locations to determine the MSD-free or least MSD affected setup.

In some example embodiments, if no frequency resource satisfies the one or more interference conditions, or all frequency resources are exhausted, the UE 102 may select a secondary cell (Scell) to carry a CBW which allows the sub-network device to be serviced, and create the sub-network using a channel within the band of the Scell.

As an example, if the UE 102 and the sub-network devices 106 or 108 are exhausted from spectrum resources as the network device 104 has granted full CA configuration that occupies all transceiver paths or at least those of the common-band list, the sub-network cannot be created without UE intervention. At this point the UE 102 may choose the Scell that as a minimum carries a CBW that allows the sub-network devices to be serviced. The UE 102 then may dedicate this band for the sub-network, while it stops activities on the Uu interface.

In some example embodiments, the UE 102 may transmit (208) information 212 on sub-network existence to the network device. The information 212 may include information as the frequency allocation, CBW, and power class. The network device 104 may receive (210) the information 212. As an example, the UE 102 may inform the network device 104 about the candidate frequencies it would like to use, and the network device 104 may further down-select which of the frequencies the UE 102 can use.

By implementing embodiments of signaling process 200, the UE can avoid bands which may cause or suffer channel access failures due to operation of other radio access technologies (RATs), and the UE can select the sub-network spectrum based on least co-existence and least self-interference impacts and establish the sub-network at this spectrum location. In some example embodiments, the UE can combine existing tables, with new configuration tables of the sub-network devices to form a candidate list of spectrum allocation, based on available transceiver paths in the UE. The UE can prioritize spectrum with least self-interference, and prioritize spectrum evaluating least self-interference and least co-existence issues as additional criteria for determining the spectrum allocation. The UE can inform the network of the sub-network existence and allocation.

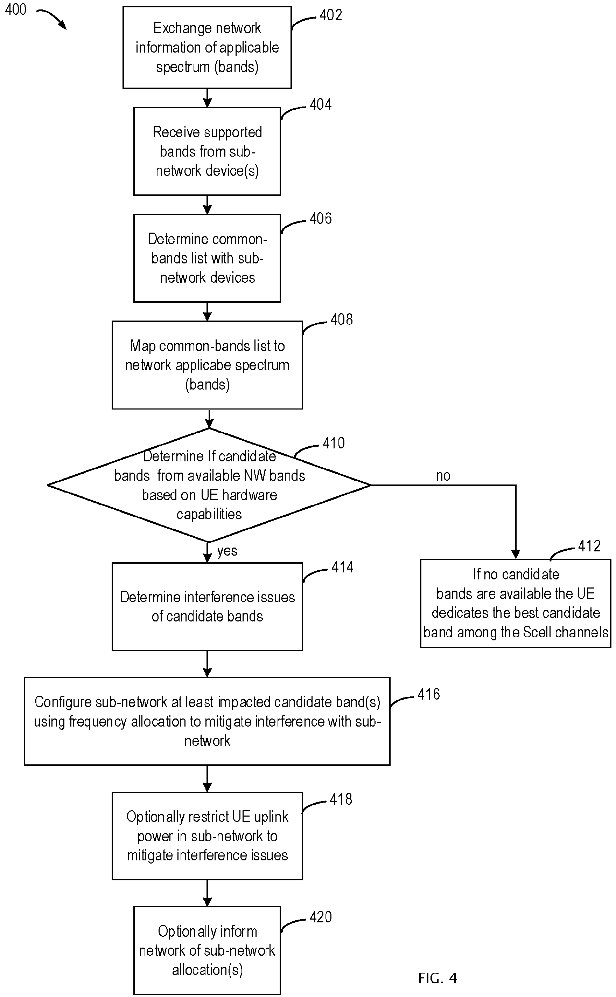

Reference is made to FIG. 4, which illustrates an example flowchart of a UE method 400 for sub-network(s) in licensed available spectrum in accordance with some example embodiments of the present disclosure. FIG. 4 will be described with reference to FIG. 1A.

At 402, the UE 102 may exchange network information of applicable spectrums or bands. At 404, the UE 102 may receive supported bands from sub-network devices 106 and/or 108. At 406, the UE may determine a command bands list with sub-network devices. The common bands may be among supported operating bands received from the network device 104 and at least one sub-network device 106 or 108. This may correspond to block 202 in FIG. 2.

At 408, the UE 102 may map the common band list to the network supported bands, and identify the available bands. The available bands may be bands that the UE 102 and the network device 104 jointly support and are not active as a cell for communication with the network device 104. For example, by using TABLE 1 as discussed above. This may correspond to block 204 in FIG. 2.

At 410, the UE 102 may determine if candidate band(s) from the available bands based on hardware capabilities of the UE 102. If yes, the process 400 continues to 414. If no, the process 400 continues to 412. At 412, the UE 102 may dedicates the best candidate band among the Scell channels. This may correspond to block 206 in FIG. 2.

At 414, the UE 102 may determine interference issues of candidates bands. For example, by using TABLE 3 to TABLE 5 and equations (1) to (4) as discussed above. At 416, the UE 102 may configure sub-network at least impacted candidate band(s) using frequency allocation to mitigate interference with sub-network. At 418, the UE 102 may restrict UE uplink power in sub-network to mitigate interference issues. At 420, the UE 102 may inform the network device 104 of sub-network allocation(s).

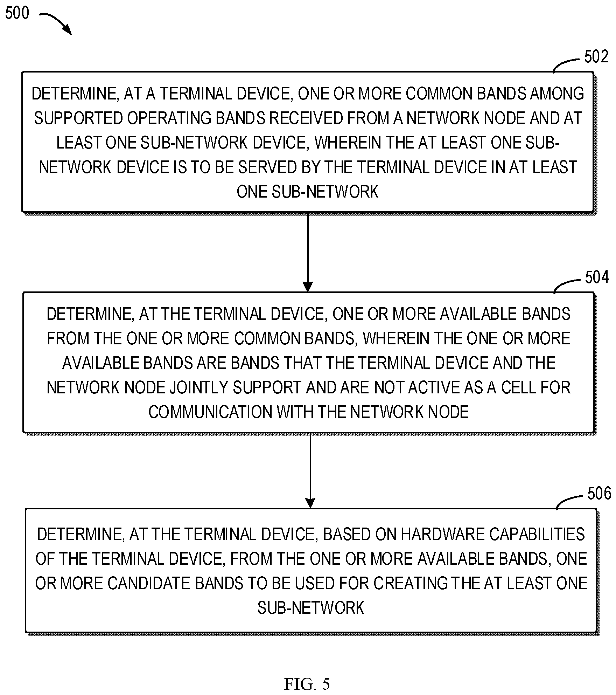

Reference is made to FIG. 5, which illustrates an example flowchart of a method 500 for determining sub-network bands in accordance with some example embodiments of the present disclosure. FIG. 5 will be described with reference to FIG. 1A.

At 502, the terminal device 102 determines one or more common bands among supported operating bands received from a network node and at least one sub-network device. The at least one sub-network device is to be served by the terminal device in at least one sub-network.

At 504, the terminal device 102 determines one or more available bands from the one or more common bands. The one or more available bands are bands that the terminal device and the network node jointly support and are not active as a cell for communication with the network node.

At 506, the terminal device 102 determines, based on hardware capabilities of the terminal device, from the one or more available bands, one or more candidate bands to be used for creating the at least one sub-network.

It is to be understood that the method 500 may comprise further steps corresponding to the example embodiments as provided by FIGS. 2 and 4, and thus for the purpose of simplification, herein, the further steps will not be described again. By implementing the example embodiments as provided by the method 500, the UE can avoid bands which may cause or suffer channel access failures due to operation of other radio access technologies (RATs), and the UE can select the sub-network spectrum based on least co-existence and least self-interference impacts and establish the sub-network at this spectrum location.

In some example embodiments, an apparatus capable of performing the method 500 (for example, the terminal device 102) may comprise means for performing the respective steps of the method 500. The means may be implemented in any suitable form. For example, the means may be implemented in a circuitry or software module.

In some example embodiments, the apparatus may comprise means for means for determining, at a terminal device, one or more common bands among supported operating bands received from a network node and at least one sub-network device, wherein the at least one sub-network device is to be served by the terminal device in at least one sub-network; means for determining, at the terminal device, one or more available bands from the one or more common bands, wherein the one or more available bands are bands that the terminal device and the network node jointly support and are not active as a cell for communication with the network node; and means for determining, at the terminal device, based on hardware capabilities of the terminal device, from the one or more available bands, one or more candidate bands to be used for creating the at least one sub-network.

In some example embodiments, the apparatus may further comprise means for determining, based on one or more interference conditions of the one or more candidate bands, a frequency allocation which has minimum impacts of self-interferences of the one or more candidate bands.

In some example embodiments, the one or more interference conditions may comprise at least one of the following: a combination of the one or more candidate bands with an active band having a minimum maximum sensitivity degradation (MSD) value, wherein the combination is an addition of the one or more candidate bands; a combination of the one or more candidate bands having a minimum coexistence interference; or a combination of the one or more candidate bands having a minimum interference disturbance from other (RATs).

In some example embodiments, a self-interference comprises at least one of the following: an UL harmonic self-interference impact; or a harmonic mixing MSD.

In some example embodiments, the apparatus may further comprise means for determining, based on frequency ranges affected by MSD, the frequency allocation of the one or more candidate bands; and means for creating the sub-network based on the frequency allocation.

In some example embodiments, the means for determining the frequency allocation of the one or more candidate bands may comprise means for determining whether frequency relations between the one or more candidate bands satisfy predetermined frequency relations; means for based on determining that the frequency relations do not satisfy the predetermined frequency relations, selecting a corresponding frequency allocation; and means for based on determining that the frequency relations satisfy the predetermined frequency relations, preventing from selecting a corresponding frequency allocation.

In some example embodiments, a frequency relation of an UL harmonic may be associated with: an UL frequency including channel bandwidth (CBW) of a first candidate band and/or an active band, a frequency including CBW of a second candidate band and/or the active band, and a first predetermined parameter.

In some example embodiments, a frequency relation of a harmonic mixing may be associated with a frequency including CBW of a first candidate band and/or an active band, a frequency including CBW of a second candidate band and/or the active band, and a second predetermined parameter.

In some example embodiments, a frequency relation of a source of an IMD may be associated with a frequency including CBW of a first candidate band combined with a second candidate band or an active band, a frequency including CBW of a third candidate band or the active band, and a third predetermined parameter.

In some example embodiments, the apparatus may further comprise means for based on determining that none of the candidate bands satisfy the one or more interference condition, restrict a UL power of the terminal device in a sub-network assigned band to mitigate interference.

In some example embodiments, the apparatus may further comprise means for transmitting, to the network device, information on sub-network existence including information as the frequency allocation, CBW, and power class.

In some example embodiments, the apparatus may further comprise means for based on determining that no frequency resource satisfies the one or more interference conditions, or all frequency resources are exhausted, selecting a Scell to carry a CBW which allows the sub-network device to be serviced; and means for creating the sub-network using a channel within the band of the Scell.

In some example embodiments, the apparatus may further comprise means for performing other steps in some embodiments of the method 500. In some example embodiments, the means comprises at least one processor and at least one memory including computer program code, the at least one memory and computer program code configured to, with the at least one processor, cause the performance of the apparatus.

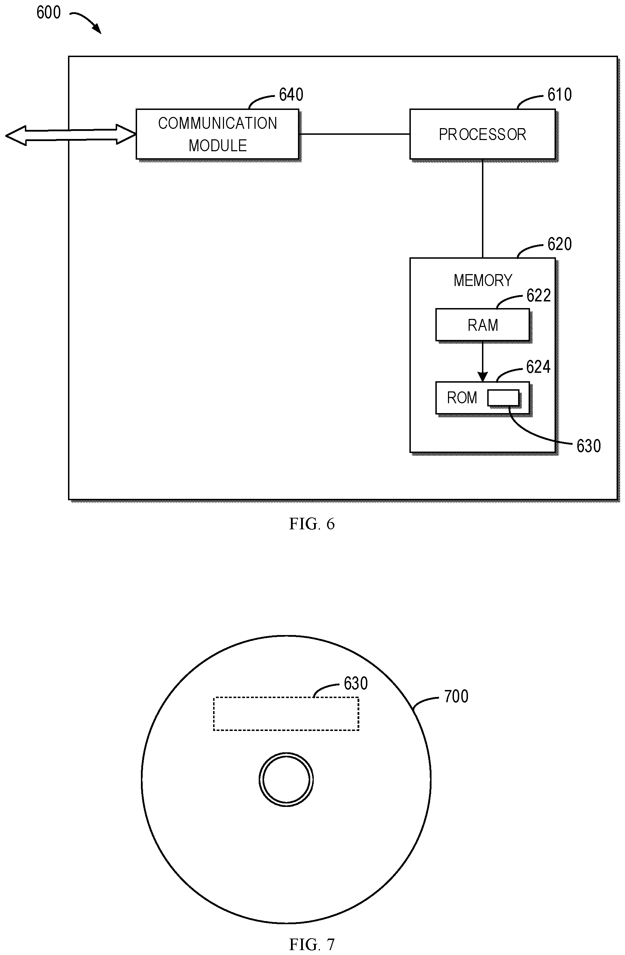

Reference is made to FIG. 6, which illustrates an example simplified block diagram of a device 600 that is suitable for implementing embodiments of the present disclosure. The device 600 may be provided to implement the communication device, for example the terminal device 102 as shown in FIG. 1A. As shown, the device 600 includes one or more processors 610, one or more memories 620 may couple to the processor 610, and one or more communication modules 640 may couple to the processor 610.

The communication module 640 is for bidirectional communications. The communication module 640 has at least one antenna to facilitate communication. The communication interface may represent any interface that is necessary for communication with other network elements, for example the communication interface may be wireless or wireline to other network elements, or software based interface for communication.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a read only memory (ROM) 624, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The program 630 may be stored in the ROM 624. The processor 610 may perform any suitable actions and processing by loading the program 630 into the RAM 622.

The embodiments of the present disclosure may be implemented by means of the program so that the device 600 may perform any process of the disclosure as discussed with reference to FIGS. 4 and 5. The embodiments of the present disclosure may also be implemented by hardware or by a combination of software and hardware.

In some embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. The computer readable medium may include any types of tangible non-volatile storage, such as ROM, EPROM, a flash memory, a hard disk, CD, DVD, and the like. FIG. 7 shows an example of the computer readable medium 700 in form of CD or DVD. The computer readable medium has the program 630 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 500 as described above with reference to FIG. 5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous.

Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. An apparatus comprising:

   means for determining, at a terminal device (102), one or more common bands among supported operating bands received from a network node (104) and at least one sub-network device, wherein the at least one sub-network device (106, 108) is to be served by the terminal device in at least one sub-network (110);
   means for determining one or more available bands from the one or more common bands, wherein the one or more available bands are bands that the terminal device and the network node jointly support and are not active as a cell for communication with the network node; and
   means for determining based on hardware capabilities of the terminal device, from the one or more available bands, one or more candidate bands to be used for creating the at least one sub-network.

2. The apparatus of claim 1, wherein the apparatus further comprises:
   means for determining, based on one or more interference conditions of the one or more candidate bands, a frequency allocation which has minimum impacts of self-interferences of the one or more candidate bands.

3. The apparatus of claim 2, wherein the one or more interference conditions comprise at least one of the following:

   a combination of the one or more candidate bands with an active band having a minimum maximum sensitivity degradation (MSD) value, wherein the combination is an addition of the one or more candidate bands;
   a combination of the one or more candidate bands having a minimum coexistence interference; or
   a combination of the one or more candidate bands having a minimum interference disturbance from other radio access technologies (RATs).

4. The apparatus of claim 3, wherein a self-interference comprises at least one of the following:

   an uplink (UL) harmonic self-interference impact; or
   a harmonic mixing MSD.

5. The apparatus of claims 2-4, wherein the apparatus further comprises:

   means for determining, based on frequency ranges affected by MSD, the frequency allocation of the one or more candidate bands; and
   means for creating the sub-network based on the frequency allocation.

6. The apparatus of claim 5, wherein the means for determining the frequency allocation determines the frequency allocation of the one or more candidate bands by:

   determining whether frequency relations between the one or more candidate bands satisfy predetermined frequency relations;
   based on determining that the frequency relations do not satisfy the predetermined frequency relations, selecting a corresponding frequency allocation; or
   based on determining that the frequency relations satisfy the predetermined frequency relations, preventing from selecting a corresponding frequency allocation.

7. The apparatus of claim 6, wherein a frequency relation of an UL harmonic is associated with:

an UL frequency including channel bandwidth (CBW) of a first candidate band and/or an active band, a frequency including CBW of a second candidate band and/or the active band, and a first predetermined parameter.

8. The apparatus of claim 6 or 7, wherein a frequency relation of a harmonic mixing is associated with:
a frequency including CBW of a first candidate band and/or an active band, a frequency including CBW of a second candidate band and/or the active band, and a second predetermined parameter.

9. The apparatus of any of claims 6-8, wherein a frequency relation of a source of an intermodulation products (IMD) is associated with:
a frequency including CBW of a first candidate band combined with a second candidate band or an active band, a frequency including CBW of a third candidate band or the active band, and a third predetermined parameter.

10. The apparatus of any of claims 1-9, wherein the apparatus further comprises:
means for restricting, based on determining that none of the candidate bands satisfy the one or more interference condition, a UL power of the terminal device in a sub-network assigned band to mitigate interferences.

11. The apparatus of any of claims 1-10, wherein the apparatus further comprises:
means for transmitting, to the network node, information on sub-network existence including information as the frequency allocation, CBW, and power class.

12. The apparatus of any of claims 1-11, wherein the apparatus further comprises:

means for selecting, based on determining that no frequency resource satisfies the one or more interference conditions, or all frequency resources are exhausted, a secondary cell (Scell) to carry a CBW which allows the sub-network device to be serviced; and
means for creating the sub-network using a channel within the band of the Scell.

13. A method comprising:

determining (502), at a terminal device, one or more common bands among supported operating bands received from a network node and at least one sub-network device, wherein the at least one sub-network device is to be served by the terminal device in at least one sub-network;
determining (504) one or more available bands from the one or more common bands, wherein the one or more available bands are bands that the terminal device and the network node jointly support and are not active as a cell for communication with the network node; and
determining (506) based on hardware capabilities of the terminal device, from the one or more available bands, one or more candidate bands to be used for creating the at least one sub-network.

14. The method of claim 13, further comprising: determining, based on one or more interference conditions of the one or more candidate bands, a frequency allocation which has minimum impacts of self-interferences of the one or more candidate bands.

15. A non-transitory computer readable medium comprising program instructions for causing an apparatus to perform a method of claim 13 or claim 14.

FIG. 1A

100B

Front-end modules    Transceiver

6G Band

| | |
Filters | Amplifiers

PScell    6G new frequency range

UHB

Filters | Amplifiers

Ultra highband

Band 7

Filters | Amplifiers

Scell 2    High band

Band 1

Pcell    Mid band

Band 5

Filters | Amplifiers

Scell 1    Low band

FIG. 1B

100C

Front-end modules    Transceiver

6G Band

Channel
and
propagation

Filters | Amplifiers    PScell    6G new frequency range

Filters | Amplifiers    PScell    6G new frequency range

Filters | Amplifiers    PScell    6G new frequency range

Filters | Amplifiers    PScell    6G new frequency range

FIG. 1C

100D

FIG. 1D

100E

FIG. 1E

100F

NW antennas         Front-end

UE antennas         Transceiver

Layers

Band

Band

FIG. 1F

100G

**Contiguous intra-band
carrier aggregation**

112          114

Power [dBm]

100MHz 100MHz

n77          Frequency

FIG. 1G

100H

**Non Contiguous intra-band
carrier aggregation**

FIG. 1H

100I

| LTE | Wi-Fi | | LTE |
|-----|-------|---|-----|
| Band 40 | 2.4GHz | | Band 41<br>Band 7 – Band 38 |
| 2300MHz | 2400Mhz | 2483Mhz | 2500Mhz          2690Mhz |

FIG. 1I

FIG. 1J

FIG. 1K

FIG. 1L

FIG. 1M

200

102
TERMINAL DEVICE

104
NETWORK DEVICE

202
DETERMINE ONE OR MORE COMMON BANDS AMONG SUPPORTED OPERATING BANDS RECEIVED FROM A NETWORK NODE AND AT LEAST ONE SUB-NETWORK DEVICE

204
DETERMINE ONE OR MORE AVAILABLE BANDS FROM THE ONE OR MORE COMMON BANDS

206
DETERMINE ONE OR MORE CANDIDATE BANDS TO BE USED FOR CREATING THE AT LEAST ONE SUB-NETWORK

212 INFORMATION ON SUB-NETWORK EXISTENCE

208

210

FIG. 2

EP 4 580 234 A1

300

| 450MHz | 960MHz | 1626MHz | 2170MHz | 2300MHz | 2690MHz | 3300MHz | 7125MHz | 15.35GHz | 48.2GHz |

Low bands   Mid bands   High bands   Ultra high bands   6G bands   mmwave bands

Network

UE

Sub-network device #1

Sub-network device #z

FIG. 3

400

402
Exchange network information of applicable spectrum (bands)

404
Receive supported bands from sub-network device(s)

406
Determine common-bands list with sub-network devices

408
Map common-bands list to network applicabe spectrum (bands)

410
Determine If candidate bands from available NW bands based on UE hardware capabilities

no

yes

412
If no candidate bands are available the UE dedicates the best candidate band among the Scell channels

414
Determine interference issues of candidate bands

416
Configure sub-network at least impacted candidate band(s) using frequency allocation to mitigate interference with sub-network

418
Optionally restrict UE uplink power in sub-network to mitigate interference issues

420
Optionally inform network of sub-network allocation(s)

FIG. 4

500

502

DETERMINE, AT A TERMINAL DEVICE, ONE OR MORE COMMON BANDS AMONG SUPPORTED OPERATING BANDS RECEIVED FROM A NETWORK NODE AND AT LEAST ONE SUB-NETWORK DEVICE, WHEREIN THE AT LEAST ONE SUB-NETWORK DEVICE IS TO BE SERVED BY THE TERMINAL DEVICE IN AT LEAST ONE SUB-NETWORK

504

DETERMINE, AT THE TERMINAL DEVICE, ONE OR MORE AVAILABLE BANDS FROM THE ONE OR MORE COMMON BANDS, WHEREIN THE ONE OR MORE AVAILABLE BANDS ARE BANDS THAT THE TERMINAL DEVICE AND THE NETWORK NODE JOINTLY SUPPORT AND ARE NOT ACTIVE AS A CELL FOR COMMUNICATION WITH THE NETWORK NODE

506

DETERMINE, AT THE TERMINAL DEVICE, BASED ON HARDWARE CAPABILITIES OF THE TERMINAL DEVICE, FROM THE ONE OR MORE AVAILABLE BANDS, ONE OR MORE CANDIDATE BANDS TO BE USED FOR CREATING THE AT LEAST ONE SUB-NETWORK

FIG. 5

600

| | 640 | | 610 |
| COMMUNICATION MODULE | | PROCESSOR | |

620

MEMORY

622

RAM

624

ROM

630

FIG. 6

630

700

FIG. 7

Europäisches
Patentamt

European
Patent Office

Office européen
des brevets

# EUROPEAN SEARCH REPORT

**Application Number**

EP 24 22 2295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/050144 A1 (MA JIANGLEI [CA] ET AL) 20 February 2014 (2014-02-20)<br>* paragraph [0005] *<br>* paragraph [0011] - paragraph [0025] *<br>* paragraph [0081] - paragraph [0158] *<br>- - - - - | 1-15 | INV.<br>H04W16/14<br>H04B7/155<br>H04B7/26<br>H04L5/00<br>H04L5/14 |
| X | US 2007/155315 A1 (LEE MI-HYUN [KR] ET AL) 5 July 2007 (2007-07-05)<br>* paragraph [0007] *<br>* paragraph [0038] *<br>* paragraph [0059] - paragraph [0071] *<br>- - - - - | 1-15 | H04L25/20<br>H04W52/14<br>H04W72/02<br>H04W72/0453<br>H04W88/04<br><br>ADD.<br>H04W16/10 |

**TECHNICAL FIELDS
SEARCHED (IPC)**

H04W
H04L
H04B

The present search report has been drawn up for all claims

| Place of search | Date of completion of the search | Examiner |
|---|---|---|
| Berlin | 31 January 2025 | López Pérez, Mariano |

EPO FORM 1503 03.82 (P04C01)

## ANNEX TO THE EUROPEAN SEARCH REPORT
## ON EUROPEAN PATENT APPLICATION NO.

EP 24 22 2295

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | Publication date |
|---|---|---|---|
| US 2014050144 A1 | 20-02-2014 | BR PI0915353 A2 | 27-06-2017 |
| | | CN 102119570 A | 06-07-2011 |
| | | CN 105356987 A | 24-02-2016 |
| | | CN 105554890 A | 04-05-2016 |
| | | EP 2286626 A1 | 23-02-2011 |
| | | JP 2011523310 A | 04-08-2011 |
| | | JP 2014209742 A | 06-11-2014 |
| | | KR 20110036574 A | 07-04-2011 |
| | | KR 20140050748 A | 29-04-2014 |
| | | US 2011158156 A1 | 30-06-2011 |
| | | US 2014050144 A1 | 20-02-2014 |
| | | WO 2009149565 A1 | 17-12-2009 |
| US 2007155315 A1 | 05-07-2007 | EP 1804442 A1 | 04-07-2007 |
| | | JP 2007184935 A | 19-07-2007 |
| | | US 2007155315 A1 | 05-07-2007 |

EPO FORM P0459

For more details about this annex : see Official Journal of the European Patent Office, No. 12/82